Europäisches Patentamt

(19) European Patent Office

Office européen des brevets

(11) Publication number: **0 193 219**

**A1**

(12) # EUROPEAN PATENT APPLICATION

(21) Application number: **86200107.0**

(22) Date of filing: **24.01.86**

(51) Int. Cl.⁴: **A 43 B 7/32**
**A 43 B 9/16, B 29 C 39/20**

(30) Priority: **30.01.85 NL 8500263**

(43) Date of publication of application:
**03.09.86 Bulletin 86/36**

(84) Designated Contracting States:
**BE DE FR NL SE**

(71) Applicant: **Vredestein N.V.**
**President Kennedylaan 104**
**NL-6883 AX Velp(NL)**

(72) Inventor: **Pierik, Cornelis**
**Populierenplein 15**
**NL-8102 JK Raalte(NL)**

(74) Representative: **Schumann, Bernard Herman**
**Johan et al,**
**OCTROOIBUREAU ARNOLD & SIEDSMA Sweelinckplein**
**1**
**NL-2517 GK The Hague(NL)**

(54) Safety footwear and method for manufacturing same.

(57) The invention relates to safety footwear, for example a shoe or boot (1), provided with an inner sole (2) to which an outer sole (3) with a heel is connected, in which heel a relatively elastic portion (6) is accomodated.

The invention has for its object to provide safety footwear which leads itself to automatic manufacture, for example by injection moulding, as is usual in the production of two-coloured boots on a rotary injection moulding apparatus, which has a cost saving effect and can also be cheaper as PVC is not excluded as a material.

In order to realise the above mentioned aim, the invention provides safety footwear (1) of the type mentioned in the preamble, the inner sole (2) material of which has a lesser hardness than that of the outer sole (3) and heel (4), and where the relatively elastic portion (6) is made in the form of a cushion formed on the inner sole (2), this cushion entirely filling a shallow recess (5) in the outer sole (3) in the heel zone.

The invention further relates to a method for manufacturing such footwear, according to which method the shank with the inner sole (2) is first formed by injection moulding, at least one projecting part being thereby formed on the underside of the inner sole (2) by using a mould (8) of suitable shape, the shaped shank with inner sole (2) is subsequently allowed to cool at least slightly, and the outer sole (3) with the heel (4) is then formed by injection moulding, thereby also adhering to the lower surface of the inner sole (2).

FIG.1

-1-

Title: Safety footwear and method for manufacturing same.

-------------------------------------------------------------

The invention relates to safety footwear, for example a shoe or boot, provided with an inner sole to which an outer sole with a heel is connected, in which heel a relatively elastic portion is accomodated. Such footwear is intended among other things to prevent back and brain injury, most often in combination with damage to heel-bone/bones, as a result of accidents where the wearer in falling comes to rest on the heel-bone, or jumps from too great a height. Even with the use of known safety footwear, the energy of descent is mostly too great for the configuration of heel-knee-hip-back-cranium, so that damage can occur along this line.

At least a certain minimum energy absorption is required for the load impact on the heel. According to DIN norm 4843 safe footwear is required to absorb energy amounting to at least 30 Joules, at a loading of between 50 N and 5.000 N and the compression associated with it. The energy absorption is defined as the integral of the force over the distance.

Safety footwear of the above mentioned type is known from diverse publications. Referred to are the

**0193219**

German Auslege 27 38 815, the German Offenlegungsschrift 31 11 186, the German Offenlegung 30 44 195 and the German Auslege 1.128.327.

Use is most often made of rubber boots, which by now are also considered obsolete, of boots of polyurethane foam, which are certainly light but have the drawback of being expensive, and finally of boots in PVC, which are cheap but are found in practice to be unable to achieve the above mentioned norm.

A disadvantage of the known art documented above is that it is not possible without very considerable costs to manufacture the footwear by an automatic process.

The invention has for its object to provide safety footwear which leads itself to automatic manufacture, for example by injection moulding, as is usual in the production of two-coloured boots on a rotary injection moulding apparatus, which has a cost saving effect and can also be cheaper as PVC is not excluded as a material.

In order to realise the above mentioned arms, the invention provides safety footwear of the type mentioned in the preamble, the inner sole material of which has a lesser hardness than that of the outer sole and heel, and where the relatively elastic portion is made in the form of a cushion formed on the inner sole, this cushion entirely filling a shallow recess in the outer sole in the heel zone.

Surprisingly it has been found that such footwear can absorb energy better than for example a heel provided with an air compartment.

It is advantageous if the cushion possesses the form of a round disc.

In a preferred embodiment this cushion runs downward, so that the cushion in the form of a disc has a truncated cone-shaped structure.

Very good results are achieved with a variant in which the profile of the heel has in large measure the form of a U open to the front.

It has been found surprisingly that the required energy absorption can also be attained with safety footwear according to the invention in which a protective plate of metal, strengthened plastic or the like is incorporated in the inner sole and/or is provided if required with a toe protection cap.

In a preferred embodiment the footwear, or at least the inner sole and the outer sole with heel, consists entirely of PVC or other thermoplastic material.

Excellent results are produced with an embodiment in which the inner sole has a hardness of $45-50^{\circ}$ Sh A and the outer sole with heel a hardness of $55-70^{\circ}$ Sh A.

The invention further relates to a method for manufacturing of safety footwear, for example a shoe or boot, provided with a shank having an inner sole formed thereon to which is connected an outer sole with a heel, in which heel a relatively elastic portion is accomodated, according to which method the shank with the inner sole is first formed by injection moulding, at least one projecting part being thereby formed on the underside of the inner sole by using a mould of suitable shape, the shaped shank with inner sole is subsequently allowed to cool at least slightly, and the outer sole with the heel is then formed by injection moulding, thereby also adhering to the lower surface of the inner sole. For the manufacture of safety footwear with a protective plate incorporated in the inner and/or outer sole, use can be made of a method according to which, prior to the forming of the shank and the inner sole, a protective plate of corresponding shape is laid on the bottom of the mould, the form of which corresponds with the required form of the underside of the inner sole and the shank with the inner sole is then formed by injection moulding, whereby the injection moulding material is admitted into the mould via at least one inlet orifice in the rearmost zone of the mould, close to the rear edge of the inserted protective plate. Surprisingly it has been found that the presence of the, for example, steel protective plate forms no hindrance to the filling of the cavity in the mould for the projecting part. The injected plastic is found to move between the inserted protective plate and the bottom of the mould in the direction of the cavity concerned and to fill it completely. With the removal of the shank with inner sole from the mould, it is found that the protective plate is almost completely accessible on the underside, with the exception of the cushion.

It is noted that, depending on the material of the protective plate, it may be necessary to treat this protective plate beforehand such as to ensure as good an adhesion as possible of the protective plate on the material of the inner sole and the outer sole.

According to another method, the outer sole with the heel can be formed first by injection moulding, while leaving clear a shallow recess on the upper face for accomodating the relatively elastic portion, the shaped outer sole with the heel can subsequently be allowed to cool at least slightly, and the shank with the inner sole and the relatively elastic member can then be formed by injection moulding, thereby also adhering on the upper face of the outer sole. For manufacturing safety footwear having a protective plate incorporated in the inner and/or outer sole in this manner, use can be made of a method whereby, prior to the forming of the shank and the inner sole, a protective plate of corresponding shape is laid on the upper surface of the outer sole with the heel, and the shank with the inner sole is then formed by injection moulding, whereby the injection moulding material is admitted into the mould via at least one inlet orifice in the rearmost zone of the mould, close to the rear edge of the inserted protective plate.

The invention will now be elucidated with reference to a drawing, in which:

Fig. 1 shows a section through a portion of a safety boot according to the invention;

Fig. 2 shows a schematic top view of a part of the portion from fig. 1;

Fig. 3 shows a bottom view;

Fig. 4 shows a mould for the clarification of the manner of manufacturing a boot;

Fig. 5 shows the mould from fig. 4 in a following production stage.

Fig. 6 shows a section corresponding with fig. 1 of a boot having a metal plate in the inner sole;

Fig. 7 shows a detail of fig. 6.

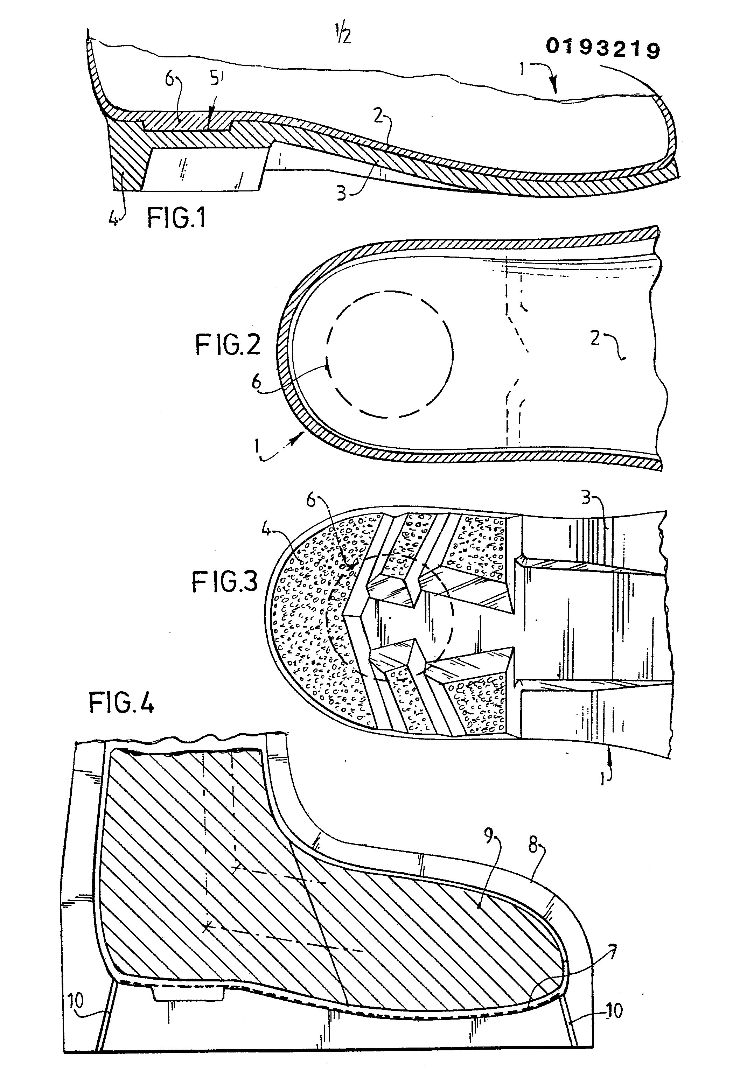

Fig. 1 shows a safety boot 1 provided with an inner sole 2 to which is connected an outer sole 3 with a heel. In the heel zone in the upper surface of the outer sole 3 is located a shallow recess 5, which is entirely filled with the same material as that of the inner sole, this latter having a lesser hardness than the material of the outer sole. In this way a disc 6 is formed which serves as an extra member of elastic material which contributes to the shock absorbing capacity.

The inner sole as well as the outer sole with the heel are manufactured in PVC.

Fig. 2 shows the round shape of disc 6.

Fig. 3 shows that the profile of heel 4 has more or less the shape of a horseshoe.

In the manner shown in fig. 4 a metal plate 7 indicated by a dotted line can be placed in a mould 8 with a tree 9 prior to the formation via injection orifices 10 of the inner sole with the shank (not drawn) of the safety boot connected thereto.

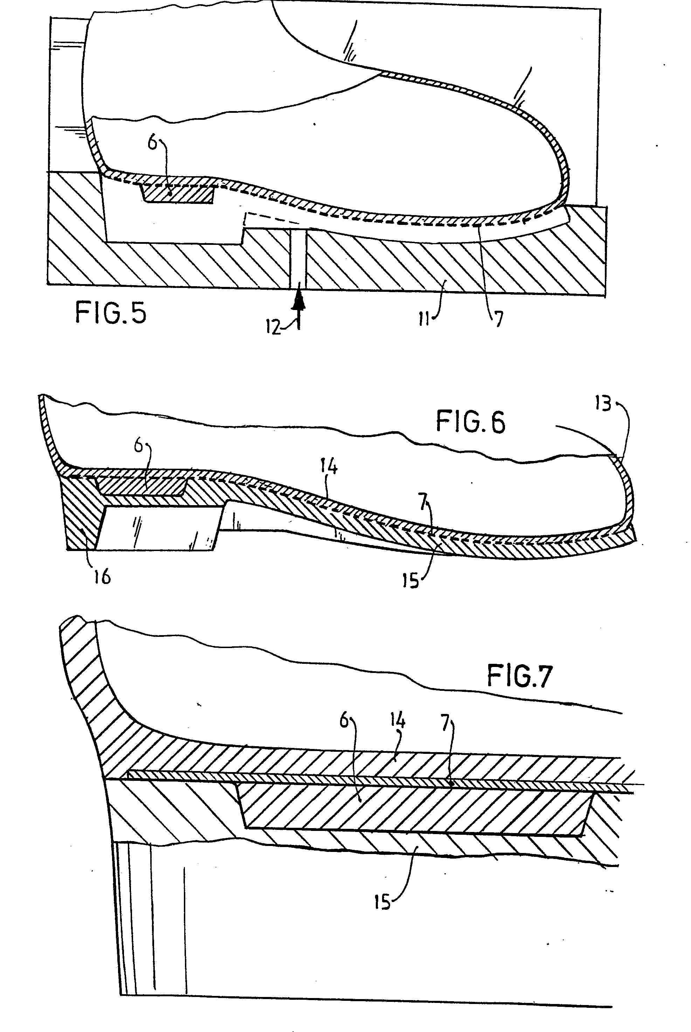

Fig. 5 shows that plate 7 is wholly connected to the inner sole, after which, in the subsequent production phase, by making use of mould 11, PVC can be introduced via injection orifice 12 moulding on the outer sole with the heel.

Fig. 6 shows the finished safety boot 13 having an inner sole 14 and an outer sole 15 with heel 16, between which is accomodated metal plate 7. Also clearly seen in the figures 5, 6 and 7 is the disc shaped extra member 6 of elastic material.

It is finally noted that the cushion can also be made in the form of a number of discrete members, such as vertical rods, for example circular cylindrical, or corrugations extending in longitudinal or transverse direction.

-1-

## CLAIMS

1. Safety footwear, for example a shoe or boot, provided with a shank having an inner sole formed thereon, to which is connected an outer sole with a heel, in which heel a relatively elastic portion is accomodated, characterized in that the material of said inner sole has a lesser hardness than that of said outer sole and heel and that said relatively elastic portion has the form of a cushion formed on said inner sole, which cushion wholly fills a shallow recess in said outer sole in the heel zone.

2. Safety footwear as claimed in claim 1, characterized in that said cushion has the form of a round disc.

3. Safety footwear as claimed in claim 1 or 2, characterized in that said cushion runs downward.

4. Safety footwear as claimed in any of the foregoing claims, characterized in that the profile of the heel has in large measure the shape of a U open to the front.

5. Safety footwear as claimed in any of the foregoing claims, characterized by a protective plate accomodated in the inner sole and/or outer sole.

6. Safety footwear as claimed in any of the foregoing claims, characterized in that said footwear consists of PVC or other thermoplastic material.

7. Safety footwear as claimed in any of the foregoing claims, characterized in that the inner sole has a hardness of 45-50° Sh A and the outer sole with the heel a hardness of 55-70° Sh A.

8. Method for manufacturing safety footwear, for example a shoe or boot, provided with a shank having an inner sole formed thereon, to which is connected an outer sole with a heel, in which heel a relatively elastic portion is accomodated, characterized in that the shank with inner sole is first formed by injection moulding, at least one projecting part being thereby formed on the underside of the inner side by using a mould of suitable shape, that the shaped shank with inner sole is subsequently allowed to cool at least slightly, and that the outer sole with the heel is then formed by injection moulding, thereby also adhering to the lower surface of said inner sole.

9. Method for manufacturing safety footwear, for example a shoe or boot, provided with a shank having an inner sole formed thereon, to which is connected an outer sole with a heel, in which heel a relatively elastic portion is accomodated, characterized in that said outer sole with heel is first formed by injection moulding while leaving clear a shallow recess on the upper surface for accomodating said relatively elastic portion, that the shaped outer sole with heel is subsequently allowed to cool at least slightly, and that said shank with inner sole and said relatively elastic member are then formed by injection moulding, thereby also adhering to the upper surface of said outer sole.

10. Method as claimed in claim 8 for manufacturing safety footwear having a protective plate accomodated in the inner sole and/or outer sole as claimed in claim 5, characterized in that, prior to the forming of the shank and inner sole, a protective plate of corresponding shape is laid on the bottom of the mould, the form of which corresponds with the required form of the underside of said inner sole,

0193219

and that said shank with inner sole is then formed by injection moulding, whereby the injection moulding material is admitted into the mould via at least one inlet orifice in the rearmost zone of said mould, close to the rear edge of said inserted protective plate.

11. Method as claimed in claim 9 for manufacturing safety footwear having a protective plate accomodated in the inner sole and/or outer sole as claimed in claim 5, characterized in that, prior to the forming of the shank and inner sole, a protective plate of corresponding shape is laid on the upper surface of the outer sole with the heel, and that said shank with inner sole is then formed by injection moulding, whereby the injection moulding material is admitted into the mould via at least one inlet orifice in the rearmoest zone of said mould, close to the rear edge of said inserted protective plate.

0193219

FIG.1

FIG.2

FIG.3

FIG.4

12884-5

2/2

0193219

FIG.5

6

12

11    7

FIG.6                                    13

6                14

7

16                15

FIG.7

6   14   7

15

12884-5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 193 835 (A.W. WILISCH) * Column 1, lines 11-17; column 3, lines 49-57; figure 3 * | 1,3,6 | A 43 B 7/32 A 43 B 9/16 B 29 C 39/20 |
| X | DE-C- 649 858 (F.E. BIELEFELD) * Whole document * | 1-3,5 | |
| X | FR-A-2 029 108 (R. WUCHER) * Page 3, lines 1-19; figures 1,2 * | 8 | |
| X | DE-B-1 202 976 (TRETORN GUMMIWERKE) * Columns 4,5; figures 1,2 * | 9 | |

---

**TECHNICAL FIELDS SEARCHED (Int. Cl.4)**

A 43 B
B 29 C

The present search report has been drawn up for all claims

| Place of search | Date of completion of the search | Examiner |
|---|---|---|
| THE HAGUE | 26-02-1986 | MALIC K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82